(19) Europäisches Patentamt
European Patent Office
Office européen des brevets

(11) Publication number: **0 375 212 B1**

# (12) EUROPEAN PATENT SPECIFICATION

(45) Date of publication of patent specification: **14.09.94**

(51) Int. Cl.[5]: **C09D 163/00**, C08K 3/00

(21) Application number: **89312765.4**

(22) Date of filing: **07.12.89**

## (54) Coating composition for sub-marine steel structure.

(30) Priority: **07.12.88 JP 310491/88**
**28.09.89 JP 252903/89**

(43) Date of publication of application:
**27.06.90 Bulletin 90/26**

(45) Publication of the grant of the patent:
**14.09.94 Bulletin 94/37**

(84) Designated Contracting States:
**DE FR GB**

(56) References cited:
**EP-A- 0 035 798**
**DE-A- 2 328 162**
**DE-A- 3 438 506**
**GB-A- 1 039 419**

**DATABASE WPIL, accession no. 89-169364, Derwent Publications Ltd, London, GB; & JP-A-1 110 573**

(73) Proprietor: **NIPPON PAINT CO., LTD.**
**1-2, Oyodokita 2-chome**
**Kita-ku**
**Osaka-shi Osaka 572 (JP)**

(72) Inventor: **Ishihara, Yoshitaka**
**2-26, Gakuendaiwacho**
**Nara-shi Nara-ken (JP)**
Inventor: **Morita, Takeo**
**16-1, Nagaodai 2-chome**
**Hirakata-shi Osaka-fu (JP)**
Inventor: **Okai, Toshihiro**
**22-7, Myokenzaka 7-chome**
**Katano-shi Osaka-fu (JP)**
Inventor: **Jinnouti, Masahiro**
**1-7-37, Mamikita**
**Kouryo-cho**
**Kitakatsuragi-gun Nara-ken (JP)**

(74) Representative: **Whalley, Kevin et al**
**MARKS & CLERK,**
**57/60 Lincoln's Inn Fields**
**London WC2A 3LS (GB)**

**EP 0 375 212 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a coating composition for sub-marine steel structures, and more specifically it concerns an epoxy resin base coat composition which is to be applied to sub-marine steel structures such as ships, oil drilling rigs, piers, steel sea wall plates and the like, and has excellent coating workability and adhesion to steel.

DE-A-2328162 and DE-A-3438506 disclose epoxy resin compositions for application under water and containing either alumina and/or silica or manganese dioxide.

As a sub-marine, curing type coating composition, there has heretofore been used the so-called two component coating composition comprising a liquid epoxy resin and a hardening agent. Since a coating composition containing polyamide as a hardening agent is highly viscous and requires a considerably longer kneading time, attempts have been made to improve the kneading workability of such composition by substituting polyamine for the polyamide hardening agent. However, polyamines are in general of hydrophobic nature, and therefore while improved kneading workability may be obtained, coating workability and adhesion to steel plate in water are not so good. As a solution to that problem it has been attempted to add appropriate surfactant or modification of said epoxy resin with phosphoric acid, carboxylic acid or amine, so as to obtain a hydrophilic coating composition.

By the adoption of such viscosity-lowering means and hydrophilization means, an improved coating composition having well-balanced coating workability in water, curing property and adhesion property to steel surface has been offered. Such a two component epoxy resin base coating composition is indeed useful as a coating or a touch up paint for steel structures, concrete walls or the like in fresh water, but is not suitable for the steel structures in sea water due to rather poor coating workability and poor adhesion to steel plate surface.

It is, therefore, an aim of the present invention to provide an epoxy resin base coating composition which is applicable to sub-marine steel structures with an improved coating workability, and has improved adhesion to steel in sea water, thereby resulting in a cured coating on said steel structure resistive to corrosion for a longer period of time.

The present invention provides a coating composition for submarine-steel structures comprising (A) a liquid epoxy resin, (B) a hardening agent selected from polyamine, polyamide and polymercaptan, and (C) solid, proton donator particles having an average diameter of 10 µm or less, the equivalent ratio of epoxy group in (A) to active hydrogen atom in (B) being 1:0.5-1:2.0 and the content of (C) being 1-25% by weight of the total weight of the composition, wherein the solid proton donator is selected from silicophosphate, vanadium pentoxide, molybdenum oxide, and tungsten oxide.

The solid proton donator is suitably a composite pigment comprising a carrier particle having an average diameter of 10 µm or less, coated with 0.01-1g/$m^2$ of vanadium pentoxide, the carrier particle being either one of the following;

(a) pigment,
(b) aggregate,
(c) silicophosphate;

An epoxy resin component (A) may be any of the heretofore known epoxy resins used in paints, providing it is liquid at room temperature. Examples are diglycidyl ether of bisphenol A, diglycidyl ether of bisphenol F, phenol novolak epoxy resin, alkylene oxide addition products of bisphenols and other resins having in their respective molecule at least one glycidyl group represented by the formula:

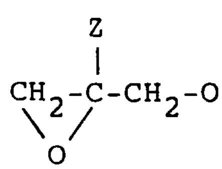

in which Z is hydrogen, methyl or ethyl group. Besides the above, carboxylic acid modified epoxy resins stated in Japanese Patent Publication (unexamined) Sho 63-30569, amine modified epoxy resins stated in Japanese Patent Publication (unexamined) Sho 63-30568 and phosphoric acid modifed epoxy resins stated in Japanese Patent Publication (unexamined) Sho 61-91217 may also be used advantageously.

As the second component, i.e. hardening agent (b), of the present composition, any of the compounds customarily used as a hardening agent for epoxy resin and selected from polyamine, polyamide and

polymercaptan may be satisfactorily used. Among them, particularly preferred are aliphatic polyamines, aromatic polyamines, alicyclic polyamines and polyaminepolyamides.

Such hardening agent is used in general in an amount so as to give 0.5~2.0 equivalent of active hydrogen atom in the abovementioned amine or mercaptan per 1 equivalent of epoxy group in said epoxy resin.

As the characteristic component of the present coating composition, there is included, besides the above mentioned epoxy resin and hardening agent, solid proton donator particles having an average particle diameter of 10 μ or less, and preferably 5 μ or less, in an amount corresponding to 1 to 25% by weight of the total weight of the composition. Since an epoxy resin base coating composition usually comprises two components, one containing an epoxy resin and the other containing a hardening agent, the abovementioned solid proton donator particles are preferably contained in said epoxy resin component. Alternatively, said donator particles are dispersed in a different, non-reactive resin which is compatible with said epoxy resin, and the thus obtained dispersion paste may be placed in a separate component other than the abovementioned two components, thereby formulating a three-component coating composition.

The present solid proton donator may be any solid proton donators (or electron acceptons) providing the solid particle form has an average diameter of 10 μ or less in the coating composition, is inert to the reaction of an epoxy resin with a hardening agent, and gradually liberates an acid into sea water.

The silicophosphate, vanadium pentoxide, molybdenum oxide and tungsten oxide comprising the solid proton donator may be used alone or in combination of two or more of them.

Alternatively, the solid proton donator may be a composite pigment comprising a carrier particle having an average diameter of 10 μm or less, coated with 0.01~1g/$m^2$ of vanadium pentoxide, the carrier particle being selected from

(A) pigment: for example, titanium oxide, zinc oxide, iron oxide, aluminium oxide, aluminium powder, barium sulfate, calcium sulfate, calcium carbonate, magnesium carbonate, talc, Kaolin clay, mica, graphite, silica, diatomite, asbestos;

(B) aggregate: for example, silica sand, glass flakes, glass fiber, micacious iron oxide;

(C) silicophosphate:

Such composite pigment may be easily prepared by a wet mixing method wherein the carrier particles having an average diameter of 10μ or less and being composed of coating use pigment, aggregate, silicophosphate, as previously mentioned are mixed, in the presence of a solvent, with a vanadium pentoxide source capable of producing vanadium pentoxide upon air-oxidation or heating in air, as, for example, vanadium containing organic chelate compound as vanadyl acetyl acetonate, vanadium (III) acetyl acetonate and vanadyl oxalate; $V_2O_5$ containing sol such as $V_2O_5$ sol, an aqueous dispersion of fine particles of glass represented by

$$nV_2O_2\text{-}mP_2O_5\text{-}KMO\text{-}M_2O$$

in which n, m and K each represents mole of the respective component, providing m/n = 100~0.1 and K/m + n = 0~1.2; and M stands for alkali metal or alkaline earth metal; $VO_4$ ion-containing aqueous solution such as aqueous $V_2O_5$-$P_2O_5$ glass solution, ammonium vanadate, vanadium nitrate; and $V_2O_5$ powder, and solvent contained is removed by heating, or a dry mixing method wherein the abovementioned carrier particles are mixed with the vanadium pentoxide source in the absence of solvent and $V_2O_5$ is adhered on the carrier particle surface by applying heat.

This composite pigment is a particularly preferable solid proton donator, since the carrier particle has on its surface a vanadium pentoxide coating and hence the surface area of said vanadium pentoxide is much greater than that of the vanadium oxide in solid acid form. Since a quantity of body pigment, aggregate or other powders customarily used in epoxy base coating composition can be activated and utilized, curing of the coating composition can be greatly improved, resulting a highly aggregated, hard coating in a short period of time.

Thus, coating adhesion property in sea water is greatly improved.

Regarding the coating amount of vanadium pentoxide, the inventors have found that the abovementioned range, i.e. 0.01~1g/$m^2$, is most suitable for the object of this invention, and if it is lower than 0.01g/$m^2$, it is hardly possible to cover the whole surface of carrier particle with vanadium pentoxide.

Furthermore, the thus obtained coating is easily disolved out in water and hence the intended working effect can not be obtained. On the other hand, even if the coating amount exceeds the upper limit of 1g/$m^2$, there is no additional effect in proportion to the increase in $V_2O_5$ amount of the composite pigment.

When the composite pigment is adopted, a comparatively large surface area of carrier powder can be utilized and therefore the required $V_2O_5$ amount may be reduced sharply as compared with the case of

vanadium oxide in solid acid form.

As to why an epoxy curing type coating composition shows a deficient adhesion to steel surface in sea water, nevertheless having a sufficient adhesion in fresh water, the inventors have continued studies and found the following: That is, then a basic material such as caustic soda is dropped in sea water containing alkaline earth metal ions such as magnesium ion and calcium ion, the sea water becomes turbid because of the formation of insoluble magnesium hydroxide (pasty material) and calcium hydroxide (powdery material) around the said basic material. In an epoxy curing type coating composition, there is a basic hardening agent such as polyamine, and therefore there is a possibility of colloidal $M(OH)_2$ (in which M stands for alkaline earth metal ion) being formed around the coating composition in sea water.

Such material will hinder wetting and coating workability and after coating said adhesion to steel surface.

The inventors' further studies revealed that the leading material for causing adhesion-hindrance is a pasty magnesium hydroxide and though magnesium ions are present in dissolved form in sea water with pH about 8, they will form magnesium hydroxide at pH 9.1 or more, thereby resulting a weak boundary layer of magnesium hydroxide at around the coating.

When the surrounding atmosphere of such coating is maintained at an acidic side, the formation of said boundary layer is controlled and good adhesion of coating composition to steel surface can be obtained.

The acidic material to be used for bringing said atmosphere to acidic side must not hinder the reaction between epoxy resin and basic hardening agent such as polyamine, must gradually liberate, after formation of coating, an acid into said atmosphere, and must cause decrease in pH to the same level as that of natural sea water.

The previously mentioned solid proton donators are ideal materials for these reasons.

On the basis of these findings, the present invention has been made.

As already mentioned, the present coating composition may be offered in the form of two packages, one containing a liquid epoxy resin and solid proton donator and the other containing a hardening agent, or in the form of three packages, the first containing a liquid epoxy resin, the second a hardening agent and the third a solid proton donator in the form of dispersion paste formulated with a non-reactive resin.

Alternatively, the solid proton donator may be directly added in powder form to a mixture of epoxy resin and hardening agent just before the application thereof.

The amount of solid proton donator should be 1 to 25% by weight of the total weight of coating composition. This is because, if it is less than 1% by weight, improvements in coating workability and adhesion property are not so remarkable and if it exceeds over 25% by weight, there will be an adverse effect on coating workability and even on adhesion property of the coating composition.

In the present sub-marine coating composition, there may be added other pigments and/or aggregates customarily used in touch-up paint or the like, as desired. These pigments and aggregates are useful not only for their respective original working effects, but also for controlling floating tendency of such coating composition in sea water due to difference in specific gravity between the coating composition and sea water.

Therefore, they should preferably have a large specific gravity and excellent corrosion resistance. Examples of such pigments are titanium oxide, zinc oxide, iron oxide, aluminium oxide, aluminium powder, barium sulfate, calcium sulfate, calcium carbonate, magnesium carbonate, talc, clay, Kaolin, mica, graphite, silica, diatomaceous earth, and asbestos.

Examples of aggregates are silica sand, glass flake, glass fiber, synthetic fiber, and natural and artificial micaceous iron oxide.

As to the content of such pigment and aggregate, it should preferably be, as the total, 60% or less, in terms of volume concentration, of the total volume of the coating composition. If desired, the present coating composition may further include such modifiers as thixotropic agent, silane coupling agent, rust inhibitor and surfactant and viscosity regulators such as non-reactive diluent and solvent.

The present coating composition may be easily applied on sub-marine portion, or wet portion such as tide portion and splash portion of steel structured, by using a brush, roller, trowel filling knife and the like . The present coating composition has the following advantages as compared with heretofore proposed epoxy resin base sub-marine coating compositions.

(1) coating workability in sea water is much improved;

(2) adhesion of coating to steel surface is markedly improved.

The invention shall be now more fully explained in the following Examples. In these Examples, all parts are by weight. Evaluation of the formed coating was made as follows.

Coating workability in water:

◎ complete coating was obtained by a single spatula coating

○ complete coating was obtained by 2 times spatula coating

△ complete coating was obtained by 3~5 times spatula coating
X complete coating was obtained by 6 or more times spatula coating

Adhesion property:
remaining coating area in 10mm cross-cut adhesion test

◎ 95% or more
○ 94~80%
△ 79~50%
X 49% or less

Examples 1~10 and Comparative Example 1~3

As a test piece, there was used a steel plate (3.2mm thickness) previously dipped in sea water for 1 year and brushed with a wire-brush to St. 3 (SIS 05-5900).
To the abovementioned steel substrate, there was applied the respective coating composition shown in Table 1 by spatula in about 2mm coating thickness in sea water and coating workability was evaluated.
The adhesion property was checked after elapsing 7 days in sea water (R.T.) and after 30 days dipping in sea water at 60 °C. The test results are shown in Table 1.

Table 1

| | | Example 1 | Example 2 | Example 3 | Example 4 | Example 5 | Example 6 | Example 7 |
|---|---|---|---|---|---|---|---|---|
| Composition | bisphenol A diglycidyl ether (1) | 100 | 100 | | | | | |
| Composition | bisphenol F diglycidyl ether (2) | | | 100 | | | | |
| Composition | tartaric acid modified epoxy resin (3) | | | | 100 | 100 | 100 | 100 |
| Composition | phosphoric acid modified epoxy resin (4) | | | | | | | |
| Composition | modified aliphatic polyamine (5) | 60 | 60 | 70 | 55 | 55 | 55 | 55 |
| Composition | surfactant (6) | 1 | 1 | 1 | 1 | 1 | 1 | 1 |
| Composition | titanium oxide | 10 | 10 | 10 | 10 | 10 | 10 | 10 |
| Composition | talc | 50 | 50 | 50 | 50 | 50 | 50 | 50 |
| Composition | barium sulfate | 40 | 20 | 30 | 35 | 20 | 20 | 20 |
| Composition, solid acid | silicophosphate (7) | | | | | | | |
| Composition, solid acid | $WO_3$ (8) | | | | | | | 30 |
| Composition, solid acid | $MoO_3$ (8) | | | | | | 30 | |
| Composition, solid acid | $V_2O_5$ (8) | 10 | 30 | 20 | 15 | 30 | | |
| Composition, solid acid | (rate of solid acid)(%) | ( 3.7) | (11.1) | ( 7.1) | ( 5.6) | (11.3) | (11.3) | (11.3) |
| Total | | 271 | 271 | 281 | 266 | 266 | 266 | 266 |
| coating workability in sea water | | △ | ◎ | ○ | ◎ | ◎ | △ | ◎ |
| Adhesion | 7days dipping (R.T.) | ○ | ○ | ○ | ◎ | ◎ | ○ | ◎ |
| Adhesion | 30 days dipping (60°C) | △ | ○ | ○ | ○ | ◎ | △ | ○ |

Table 1 (continued)

| | | | Example | | | Comp. Example | | |
|---|---|---|---|---|---|---|---|---|
| | | | 8 | 9 | 10 | 1 | 2 | 3 |
| Composition | | bisphenol A diglycidyl ether (1) | | | | | | 100 |
| | | bisphenol F diglycidyl ether (2) | | | | | | |
| | | tartaric acid modified epoxy resin (3) | | 100 | 100 | 100 | | |
| | | phosphoric acid modified epoxy resin (4) | 100 | | | | 100 | |
| | | modified aliphatic polyamine (5) | 55 | 55 | 55 | 55 | 55 | 60 |
| | | surfactant (6) | 1 | 1 | 1 | 1 | 1 | 1 |
| | | titanium oxide | 10 | 10 | 10 | 10 | 10 | 10 |
| | | talc | 50 | 60 | 35 | 50 | 20 | 50 |
| | | barium sulfate | 20 | | | 49 | | 40 |
| | solid acid | silicophosphate (7) | 30 | | | | | |
| | | $WO_3$ (8) | | | | | | |
| | | $MoO_3$ (8) | | | | | | |
| | | $V_2O_5$ (8) | | 40 | 65 | 1 | 80 | 10* |
| | | (rate of solid acid)(%) | (11.3) | (15.0) | (24.4) | ( 0.4) | (30.1) | ( 3.7) |
| Total | | | 266 | 266 | 266 | 266 | 266 | 271 |
| coating workability in sea water | | | △ | ○ | △ | △ | × | △ |
| Adhesion | | 7days dipping (R.T.) | ○ | ◎ | ○ | × | △ | × |
| | | 30 days dipping (60°C) | △ | ○ | △ | × | × | × |

* ... unpulverized $V_2O_5$ (agglomerate, 30~40μ diameter)

Note

1. Bisphenol A diglycidyl ether, Epikote 828 (epoxy equivalent 190) Shell Chem. Co.
2. Bisphenol F diglycidyl ether, Araldite XPY-306 (epoxy equivalent 160) Ciba-Geigy
3. tartaric acid modified epoxy resin

   100 parts of bisphenol A diglycidyl ether (epoxy equivalent 190) and 3.8 parts of tartaric acid were mixed together and 0.05 part of N,N-dimethyl benzyl amine was added as a reaction accelerator and the mixture was reacted at 130°C for 3 hours to obtain tartaric acid modified epoxy resin.
4. phosphoric acid modified epoxy resin

   100 parts of bisphenol A diglycidyl ether (epoxy equivalent 190) and 2 parts of ortho-phosphoric acid were mixed together and the mixture was reacted at 80°C for 5 hours to obtain phosphoric acid modified epoxy resin.
5. modified aliphatic polyamine

   Fujicure-5405 (active hydrogen equivalent 110) Fuji Kasei K.K.
6. Surfactant (alkyl phosphate, Electrostripper-N, manufactured by Kawo Atlas)
7. silicophosphate (Collodinone SP028, manufactured by Mizusawa Kagaku K.K.)
8. Reagent grada (Wako Junyaku K.K.)

   pulverized in mortar to fine particles having an average diameter of 5$\mu$ or less

Manufacturing Examples of composite pigments

Manufacturing Example 1

100g of oxide powder (average diameter 0.05 µ) and 1,000ml of $V_2O_5$ sol (vanadium oxide sol, V = 1.22wt%, $V_2O_5$ = 4.35%, manufactured by Shinko Kagaku Kogyo K.K.) were mixed together and dispersed by using glass beads.
Titanium oxide powder and $V_2O_5$ were mixed in a weight ratio of 100:43.5.
The supernatant liquid was removed and the residue was dried at 200 °C for 3 hours.
A part of this powder was further baked at 700 °C for 1 hour and then pulverized in an automatic mortar.

Manufacturing Example 2

100g of titanium oxide powder (average diameter 0.3 µ) were used as powder. As a vanadium pentoxide source, the following was used.
0.2 mole of $V_2O_5$, 1 mole of $P_2O_5$ and 0.6 mole of CaO were mixed together and the mixture was heated at 900 °C to obtain a melt. This was then quickly cooled and pulverized. 150g of thus obtained powder were dissolved and dispersed in 1,000ml of water. There was a viscous precipitation at the bottom of the reaction vessel, which was easily redispersed upon stirring.
The abovementioned powder and vanadium pentoxide source were mixed together in a weight ratio of 100:25.8, and stirred.
The supernatant liquid was removed and the residue was baked at 700 °C for 1 hour and then pulverized in an automatic mortar.

Manufacturing Example 3

As powder, 100g of glass flake (CEF 325, manufactured by Nihon Glass Fiber K.K.) were used. As vanadium pentoxide source, the following baked product was used.
1 mole of $V_2O_5$ and 1 mole of $P_2O_5$ were combined together and the mixture was heated to 800 °C to melt the same. This was then quickly cooled and pulverized. 50g of the thus obtained powder were placed in 100ml of water and dissolved up to saturation concentration.
The abovementioned powder and $V_2O_5$ source were mixed together in a weight ratio of 100:50 and subjected to dispersion by using glass beads. After centrifugation, the supernatant liquid was removed and the residue was baked at 600 °C for 1 hour, and then pulverized by using an automatic mortar.

Manufacturing Example 4

As powder, 100g of Kaolin (ASP 200, manufactured by Engelhard K.K.) were used. As vanadium pentoxide source, 100ml of aqueous ammonium vanadate (concentration 300g/l) were used.
These were combined together in a stirrer. The compounding ratio of said powder and $V_2O_5$ was, in terms of weight ratio, 100:23.3.
The supernatant liquid was removed and the residue was baked at 700 °C for 1 hour, and then pulverized by using an automatic mortar.

Manufacturing Example 5

As powder, 100g of silica powder (Aerosil OX-50, manufactured by Nihon Aerosil K.K.) were used. As vanadium pentoxide source, 1,000 ml of $V_2O_5$ sol (vanadium oxide sol:V = 1.22wt%, $V_2O_5$ = 4.35%, manufactured by Shinko Kagaku Kogyo K.K.) were used.
These were combined together in a stirrer. The compounding ratio of said powder and $V_2O_5$ was, in terms of weight ratio, 100:4.35.
The supernatant liquid was removed and the residue was baked at 800 °C for 1 hour, and then pulverized by using an automatic mortar.

Manufacturing Example 6

As powder, 100g of titanium oxide (average diameter of 0.03 µ) were used. As vanadium pentoxide source, 10g of finely pulverized $V_2O_5$ (vanadium oxide, average diameter of 0.6 µ, manufactured by Shinko

Kagaku Kogyo K.K.) were used.
These were combined together in a mechanofusion system (manufactured by Hosokawa Micron K.K.).
The compounding ratio of said powder and $V_2O_5$ was, in terms of weight ratio, 100:10.
The thus obtained product was baked at 800 °C for 1 hour, and then pulverized by using an automatic mortar.

Manufacturing Example 7

As powder, 100g of silicophosphate (Collodinon SPO 28, manufactured by Mixusawa Kagaku Kogyo K.K.) were used. As vanadium pentoxide source, 300ml of vanadium oxide sol (V = 1.22wt%, $V_2O_5$ = 4.35%, manufactured by Shinko Kagaku Kogyo K.K.) were used.
These were combined together and dispersed by using glass beads.
The compounding ratio of said powder and $V_2O_5$ was, in terms of weight ratio,100:13.
The thus obtained product was baked at 700 °C for 1 hour, and then pulverized by using an automatic mortar.

Examples 11 to 17

The coating compositions shown in Table 2 were all prepared by mixing the indicated components just prior to the actual use thereof.
Onto a similar test plate as used in Example 1, the respective coating composition was applied in about 2 µmm thickness by spatula in sea water and coating workability and adhesion were evaluated as in Example 1.
The test results are shown in Table 2. As the solid proton donators, the composite pigments obtained in Manufacturing Examples 1 to 7 were used. The $V_2O_5$ coating amount was determined by dividing V amount (determined by fluorescent X-ray analysis) with surface area of powder (calculated from specific gravity and particle diameter) used.

Table 2

| | | Example 11 | 12 | 13 | 14 | 15 | 16 | 17 |
|---|---|---|---|---|---|---|---|---|
| Composition | bisphenol A diglycidyl ether (1) | 100 | 100 | 100 | 100 | 100 | 100 | 100 |
| | modified aliphatic polyamine (5) | 60 | 60 | 60 | 60 | 60 | 60 | 60 |
| | surfactant (6) | 1 | 1 | 1 | 1 | 1 | 1 | 1 |
| | titanium oxide | 10 | 10 | 10 | 10 | 10 | 10 | 10 |
| | talc | 50 | 50 | 30 | 55 | 55 | 50 | 55 |
| | barium sulfate | 40 | 40 | 40 | 40 | 40 | 40 | 40 |
| | composite pigment (Manuf. Example) | (1) | (2) | (3) | (4) | (5) | (6) | (7) |
| | composite pigment adding amount | 10 | 10 | 30 | 5 | 5 | 10 | 5 |
| | composite pigment $V_2O_5$ amount ($g/m^2$) | 0.015 | 0.04 | 0.55 | 0.26 | 0.013 | 0.02 | 0.35 |
| comp.pig. amount in paint | | 3.7 | 3.7 | 11 | 1.8 | 1.8 | 3.7 | 1.8 |
| coating workability in sea water | | ○ | ○ | ○ | ○ | ◎ | ○ | ○ |
| Adhesion | 7days dipping (R.T.) | ◎ | ○ | ○ | ◎ | ○ | ○ | ○ |
| | 30 days dipping (60°C) | ○ | ○ | ○ | ○ | ○ | ○ | ○ |

## Claims

1. A coating composition for submarine-steel structures comprising (A) a liquid epoxy resin, (B) a hardening agent selected from polyamine, polyamide and polymercaptan, and (C) solid, proton donator particles having an average diameter of 10 µm or less, the equivalent ratio of epoxy group in (A) to active hydrogen atom in (B) being 1:0.5-1:2.0 and the content of (C) being 1-25% by weight of the total weight of the composition, wherein the solid proton donator is selected from silicophosphate, vanadium

pentoxide, molybdenum oxide, and tungsten oxide.

2. A composition as claimed in claim 1, wherein the solid proton donator is a composite pigment comprising a carrier particle having an average diameter of 10 µm or less, coated with 0.01-1g/$m^2$ of vanadium pentoxide, the carrier particle being either one of the following;
   (a) pigment,
   (b) aggregate,
   (c) silicophosphate.

**Patentansprüche**

1. Beschichtungszusammensetzung für Unterwasser-Stahlkonstruktionen, umfassend (A) ein flüssiges Epoxidharz, (B) einen Härter, ausgewählt aus Polyamin, Polyamid und Polymercaptan, und (C) Protonendonator-Feststoffteilchen mit einem mittleren Durchmesser von 10 Mikrometer oder weniger, wobei das Äquivalentverhältnis von Epoxygruppe in (A) zum aktiven Wasserstoffatom in (B) 1:0,5 - 1:2,0 und das Gehalt von (C) 1 - 25 Gewichtsprozent des Gesamtgewichts der Beschichtungsmasse betragen, wobei der Protonendonator-Feststoff ausgewählt wird aus Siliciumphosphat, Vanadiumpentoxid, Molybdänoxid und Wolframoxid.

2. Zusammensetzung nach Anspruch 1, bei welcher der Protonendonator-Feststoff ein Kompositpigment ist, umfassend Trägerteilchen mit einem mittleren Durchmesser von 10 Mikrometer oder weniger und beschichtet mit 0,01 - 1 g/$m^2$ Vanadiumpentoxid, welches Trägerteilchen eines folgenden ist:
   (a) Pigment,
   (b) Füllstoff,
   (c) Siliciumphosphat.

**Revendications**

1. Composition de revêtement pour structures en acier sous-marin comprenant (A) une résine époxy liquide, (B) un agent de durcissement choisi parmi les polyamines, les polyamides et les polymercaptans et (C) des particules solides fournissant des protons ayant un diamètre moyen de 10 µm ou de moins de 10 µm, le rapport d'équivalence du groupement époxy dans (A) sur l'atome d'hydrogène actif dans (B) étant de 1:0,5 à 1:2,0 et la teneur en (C) étant de 1 à 25% en poids du poids total de la composition, dans laquelle le fournisseur de protons solide est choisi parmi les silicophosphates, le pentoxyde de vanadium, l'oxyde de molybdène et l'oxyde de tungstène.

2. Composition telle que revendiquée dans la revendication 1, dans laquelle le fournisseur de protons solide est un pigment composite comprenant une particule véhiculaire ayant un diamètre moyen de 10 µm ou inférieur à cette valeur, recouverte par 0,01 à 1 g/$m^2$ de pentoxyde de vanadium, la particule véhiculaire étant l'une quelconque des particules suivantes:
   (a) pigment,
   (b) agrégat,
   (c) silicophosphate.